Europäisches Patentamt

(19) European Patent Office

Office européen des brevets

(11) Veröffentlichungsnummer: **0 264 793**
**B1**

(12) **EUROPÄISCHE PATENTSCHRIFT**

(45) Veröffentlichungstag der Patentschrift:
12.09.90

(51) Int. Cl.⁵: **C08L 77/00**, C08K 5/14, C08K 3/18 // C08L51/00

(21) Anmeldenummer: 87114971.2

(22) Anmeldetag: 13.10.87

(54) Verfahren zur Herstellung von Formmassen aus thermoplastischem Polyamid und Pfropfkautschuk.

(30) Priorität: 22.10.86 DE 3635826
04.11.86 DE 3637441

(43) Veröffentlichungstag der Anmeldung:
27.04.88 Patentblatt 88/17

(45) Bekanntmachung des Hinweises auf die Patenterteilung:
12.09.90 Patentblatt 90/37

(84) Benannte Vertragsstaaten:
DE FR GB IT

(56) Entgegenhaltungen:
EP-A- 0 155 480
US-A- 3 228 996

CHEMICAL ABSTRACTS, Band 103, Nr. 6, 12. August 1985, Seite 34, Zusammenfassung Nr. 38186y, Columbus, Ohio, US; & JP-A-60 49 018 (UBE INDUSTRIES, LTD) 18-03-1985

(73) Patentinhaber: BAYER AG,
D-5090 Leverkusen 1 Bayerwerk(DE)

(72) Erfinder: Westeppe, Uwe, Dr., Yorckstrasse 19,
D-5630 Remscheid 11(DE)
Erfinder: Trabert, Ludwig, Dr., Leydelstrasse 67,
D-4150 Krefeld(DE)
Erfinder: Binsack, Rudolf, Dr., Bethelstrasse 4a,
D-4150 Krefeld(DE)
Erfinder: Wittmann, Dieter, Dr., Doerperhofstrasse 15,
D-4150 Krefeld(DE)
Erfinder: Lindner, Christian, Dr., Riehlerstrasse 200,
D-5000 Koeln 60(DE)
Erfinder: Merten, Josef, Dr., Krünsend 30,
D-4052 Korschenbroich(DE)

## Beschreibung

Die Erfindung betrifft thermoplastische Polyamid-Formmassen mit verbesserter Zähigkeit bei tiefen Temperaturen aus mindestens 60 Gew.-% Polyamid und 3 bis 35 Gew.-% an Pfropfkautschuken aus der Reihe der Dienkautschuke und der Acrylatkautschuke, welche dadurch hergestellt werden, daß man eine Mischung der beiden Komponenten in Gegenwart von 0,01 bis 5 Gew.-% eines Radikalbildners herstellt und die Formmassen anschließend unterhalb des Polyamidschmelzpunktes unter möglichst weitgehendem Sauerstoff-Ausschluß erhitzt.

Formkörper aus Polyamiden haben sich aufgrund ihrer mechanischen Festigkeitswerte wie Steifigkeit, Abriebfestigkeit, Härte, dynamischer und thermischer Belastbarkeit und ihrer leichten Herstellbarkeit bewährt. Ein Nachteil ist ihre unzureichende Zähigkeit.

Es gibt eine Reihe von Vorschlägen, die Zähigkeit von Polyamidformmassen durch Zumischen anderer Polymerer zu verbessern. So wurden Polyolefine (DE-A 1 694 802, DE-A 2 038 317, DE-A 3 022 295) und Ethylenionomere (EP-A 34 704, EP-A 69 200, EP-A 72 480) vorgeschlagen. Es wurden darüber hinaus als Modifikatoren gepfropfte Acrylatkautschuke und Dienkautschuke vorgeschlagen, die eine ganz spezifische Pfropfstruktur aufweisen und nach bestimmten Verfahren hergestellt werden (EP-A 3 126, DE-A 2 758 615, DE-A 3 101 771, DE-A 3 120 803). Diese Formmassen weisen im allgemeinen eine verbesserte Zähigkeit auf. Es hat sich aber gezeigt, daß solche Formmassen für wichtige Anwendungen wie beispielsweise im Kfz-Bereich an der Karosserie, den Stoßfängern und Spoilern, dem Lenkrad und der Lenkradsäule nicht zur vollen Zufriedenheit eingesetzt werden können. Es werden dafür besondere Anforderungen gestellt, insbesondere bei tiefen Temperaturen.

In der US-A 4 173 556 werden elastoplastische Kompositionen aus weniger als 50 Gew.-% Polyamid, vernetzten Kautschuken in Anteilen bis 80 Gew.-% und inerten Weichmachern beschrieben, welche in Gegenwart von Vulkanisatoren während der Vermischung/Mastifizierung vernetzend wirken. Es werden so elastomere Produkte erhalten.

Polyamidformmassen mit verbesserten Zähigkeiten sind durch Erhitzen von Mischungen aus Polyamiden und gepfropften Acrylat- und Dienkautschuken unterhalb des Schmelzpunktes des Polyamids zugänglich (DE-A 3 405 532). Nachteile dieses Verfahrens, insbesondere für technische Anwendungen, sind jedoch die langen Verweilzeiten (bis zu 10 h) und die damit verbundenen Energiekosten.

Überraschenderweise wurde nun gefunden, daß man von thermoplastichen Polyamidmassen Produkte mit guten Tieftemperaturzähigkeiten erhält, wenn man Mischungen aus mindestens 60 Gew.-% Polyamid und einem hochvernetzten Pfropfkautschuk in Gegenwart eines Radikalbildners herstellt und kurzzeitig auf Temperaturen unterhalb des Schmelzpunktes des Polyamids, vorzugsweise unter weitgehendem Ausschluß von Sauerstoff, erhitzt.

Es ist zwar bekannt, Polyamide unter Verwendung radikalbildender Katalysatoren zu vernetzen (vgl. DE-B 1 149 531). Hierdurch wird die Tieftemperaturzähigkeit jedoch nicht nennenswert verändert, zudem ist bei vernetzten Polyamiden mit Verarbeitungsschwierigkeiten zu rechnen.

Zudem mußte man bei der Umsetzung mit dem Radikalbildner in Gegenwart von Pfropfkautschuk erwarten, daß diese Pfropfprodukte, insbesondere die auf Polybutadien-Basis, geschädigt und damit unbrauchbar werden und gegebenenfalls eine Versprödung stattfindet.

Gegenstand der Erfindung ist ein Verfahren zur Herstellung von thermoplastischen Polyamidmassen auf Basis

I. mindestens 60 Gew.-%, vorzugsweise mindestens 68 Gew.-% und insbesondere mindestens 75 Gew.-%, bezogen auf die Komponenten I bis III, eines thermoplastischen Polyamids,

II. 3 bis 35 Gew.-%, vorzugsweise 5 bis 30 Gew.-%, insbesondere 10 bis 24 Gew.-%, bezogen auf die Komponenten I bis III, eines vernetzten Pfropfkautschuks mit einem Gelgehalt von mindestens 50 Gew.-%, vorzugsweise ≥ 80 Gew.-%, insbesondere von ≥ 90 Gew.-%,

III. 0,01 bis 5 Gew.-%, vorzugsweise 0,01 bis 2 Gew.-%, insbesondere 0,01 bis 1 Gew.-%, bezogen auf die Komponenten I bis III, eines Radikalbildners, vorzugsweise eines Peroxids und/oder Hydroperoxids, durch Vermischen der Komponenten unter Aufschmelzen, Granulieren und Erhitzen des Granulats auf Temperaturen von 5 bis 80°C unterhalb des Schmelzpunktes des Polyamids unter möglichst weitgehendem Ausschluß von Sauerstoff und während mindestens einer halben Stunde.

Die erfindungsgemäßen Formmasse werden vorzugsweise so hergestellt, daß man die Komponenten unter Aufschmelzen, vorzugsweise in einem Doppelwellenextruder, miteinander mischt und zu Granulat verarbeitet und anschließend, vorzugsweise unter möglichst weitgehendem Ausschluß von Sauerstoff (z. B. im Vakuum oder unter $N_2$), auf Temperaturen von 5 bis 80°C, vorzugsweise 10 bis 50°C, insbesondere 15 bis 40°C, unterhalb des Schmelzpunktes des zur Herstellung der Legierung verwendeten Polyamides, mindestens eine halbe Stunde, vorzugsweise ≤αμρ" 8 h, insbesondere 0,5 bis 3 h, erhitzt.

Als Polyamide I eignen sich alle thermoplastischen Polyamide, vorzugsweise teilkristalline Polyamide. So können als teilkristalline Polyamide für die erfindungsgemäßen Formmassen Polyamid-6, Polyamid-66 oder deren Copolymere eingesetzt werden. Weiterhin kommen teilkristalline Polyamide in Betracht, deren Säurenkomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexamethylendiamin und/oder Isophorondiamin besteht.

Außerdem sind Polyamide geeignet, die teilweise aus Lactamen mit 6 bis 12 C-Atomen und unter Mitverwendung einer oder mehrerer der obengenannten Ausgangskomponenten hergestellt worden sind.

Besonders bevorzugte teilkristalline Polyamide sind Polyamid-6 und Polyamid-66.

Die Polyamide sollen vorzugsweise eine relative Viskosität (gemessen an einer 1-gew.-%igen Lösung in m-Kresol bei 25°C) von 2,0 bis 5,0, besonders bevorzugt von 2,5 bis 4,0, aufweisen.

Bevorzugte Pfropfkautschuke II besitzen mittlere Teilchendurchmesser $d_{50}$ von 0,05 bis 1, vorzugsweise von 0,1 bis 0,8, insbesondere von 0,2 bis 0,8 µm.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), 782-796) oder mittels Elektronenmikroskopie und anschließender Teilchenauszählung (G. Kämpf, H. Schuster, Angew. makromolekulare Chemie, 14 (1970), 111-129) oder mittels Lichtstreuungsmessungen.

Die Pfropfkautschuke II sind vernetzt und haben einen Gelgehalt von mindestens 50 Gew.-%, vorzugsweise von mindestens 80 Gew.% und insbesondere von mindestens 90 Gew.-%, bezogen auf II.

Die Gelgehalte der vernetzten Dienkautschuke werden bestimmt bei 25°C in Toluol, die Gelgehalte der vernetzten Acrylatkautschuke bei 25°C in Dimethylformamid (M. Hoffmann, H, Krämer, R. Kuhn, Polymeranalytik I und II, Georg Thieme Verlag, Stuttgart (1977).

Bevorzugte Pfropfkautschuke II sind Pfropfpolymerisate, die man durch Pfropfpolysation von 15 bis 60 Gew.-%, vorzugsweise von 20 bis 50 Gew.-%, insbesondere 25 bis 40 Gew.-% wenigstens eines Vinyl- oder Vinylidenmonomeren, vorzugsweise aus der Reihe Styrol, α-Methylstryol, Acrylnitril, $C_1$-$C_8$-Alkylacrylat, $C_1$-$C_8$-Alkymethacrylat, Hydroxy-$C_2$-$C_8$-alkyl(meth)acrylat, Epoxy-$C_2$-$C_8$-alkyl(meth)acrylat, auf 40 bis 85, vorzugsweise 50 bis 80, insbesondere 60 bis 75 Gew.-% eines teilchenförmigen, vernetzten Dien- oder Acrylatkautschuks, erhält.

Die Pfropfmonomeren können einzeln oder auch in Mischungen auf die Pfropfkautschuk-Grundlage aufgepfropft werden. Bevorzugte Pfropfmonomere sind Methylmethacrylat sowie Mischungen aus Styrol und Methylmethacrylat im Mengenverhältnis 10:90 bis 50:50 und Mischungen aus Styrol und Acrylnitril im Mengenverhältnis 90:10 bis 50:50.

Bevorzugte Dienkautschuke sind vernetzte Homo- und/oder Copolymerisate aus konjugierten $C_4$-$C_6$-Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z.B. Stryol, Acrylnitril, Ester der Acryl- oder Methacrylsäure mit einwertigen $C_1$-$C_4$-Alkoholen, wie z.B. Methylmethacrylat, Ethylacrylat, Methylmethacrylat, Ethylmethacrylat, enthalten.

Die Herstellung der Dienkautschuk-Pfropfgundlage und der daraus hergestellten Pfropfpolymerisate wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie, Weinheim, 1981, S. 279-284, beschrieben.

Vorzugsweise werden als Pfropfprodukte solche eingesetzt, wie sie in der DE-A 27 42 176 beschrieben werden.

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt, wobei bevorzugt als vernetzende Monomere mit mehr als einer copolymerisierbaren Doppelbindung Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinylcyanurat, Triallylcyanurat, Trivinylisocyanurat und Triallylisocyanurat; insbesondere Triallylcyanurat; polyfunktionelle Vinylverbindungen, wie Di- und Trivinylbenzole; aber auch Triallylphosphat eingesetzt werden.

Bevorzugte vernetzende Monomere sind Allylmethacrylat, Ethylenglykoldimethacrylat, Diallyphthalat und heterocyclische Verbindungen, die mindestens drei copolymerisierbare ethylenisch ungesättigte Doppelbindungen aufweisen. Besonders bevorzugte vernetzende Monomere sind die cyclischen Monomeren Triallycyanurat, Triallylisotriazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage. Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

## EP 0 264 793 B1

Der Anteil des Polydienkerns in solchen mehrschaligen Kautschuken kann 0,1 bis 80, bevorzugt 10 bis 50 Gew.-%, betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat und Triallylisocyanurat vernetzt sind (beschrieben in DE-A 3 039 114);

b) einen Polybutadienkern enthalten (beschrieben in DE-A 3 200 070);

c) hergestellt wurden "in Abwesenheit von Suspendiermittel" (beschrieben in DE-A 3 117 052).

Bei der Herstellung der Pfropfkautschuke II durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfkautschuk II im Sinne der Erfindung ist deshalb das durch Polymerisation von Pfropfmonomeren in Gegenwart des Kautschuklatex erhaltene Produkt.

Die erfindungsgemäß hergestellten Formmassen weisen optimale Eigenschaften auf, wenn die Menge an freiem (Co)Polymerisat im Pfropfprodukt II 15 Gew.-%, vorzugsweise 10 Gew.-%, insbesondere 7 Gew.-%, bezogen auf II, nicht übersteigt.

Der Staudinger-Index dieser freien (CO)Polymerisate soll weniger als 0,6 dl/g, vorzugsweise weniger als 0,4 dl/g betragen, gemessen in Dimethylformamid bei 25°C.

Besonders bevorzugte gepfropfte Kautschuke sind z.B. in der DE-A 2 742 176, 2 941 025, 3 151 441, 3 200 070 und in der EP-A 34 748 beschrieben.

Als Radikalbildner können anorganische oder organische Peroxide oder Hydroperoxide, z.B. Verbindungen des Typs $R_1OOR_2$ eingesetzt werden ($R_1 = R_2 =$ Alkyl, Aryl, Acyl, Wasserstoff; $R_1 =$ Alkyl, Aryl, Acyl; $R_2 =$ Wasserstoff). Die Gesamtzahl der Kohlenstoffatome in den Resten $R_1$ und $R_2$ ist $\leq \alpha\mu\rho^{..}$ 30, bevorzugt $\leq \alpha\mu\rho^{..}$ 25. Beispiele sind Peroxide oder Hydroperoxide wie Dibenzoylperoxid, tert.-Butyl-hydroperoxid, Cumolhydroperoxid, Laurylperoxid, 2,5-di-tert.-butyl-2,5-dimethylhexyl-peroxid, Di-tert.butyl-peroxid oder Di-cumylperoxid.

Des weiteren sind anorganische Verbindungen mit einer O-O-Gruppierung, wie z.B. Peroxide, Per-Verbindungen von Säuren des Schwefels, z.B. Persulfate, oder auch Perborate als Radikalbildner geeignet. Bevorzugt werden Persulfate, z.B. $K_2S_2O_8$. Beispiele sind $(NH_4)_2S_2O_8$, $Na_2S_2O_8$, $Na_2O_2$, $BaO_2$, $NaBO_3 \cdot 4H_2O$, $Na_2B_4O_8 \cdot 10H_2O$.

Ein ganz besonders bevorzugter Mengenbereich an Peroxid/Hydroperoxid-Verbindungen liegt bei 0,05 bis 0,30 Gew.-%.

Die erfindungsgemäß hergestellten Formmassen können übliche Additive, wie Gleit- und Entformungsmittel, Nukleierungsmittel, Stabilisatoren, Füll- und Verstärkungsstoffe, Flammschutzmittel und deren Synergisten bzw. Stabilisatoren, sowie Farbstoffe enthalten. Weichmacher sind nicht erwünscht.

Die Formmassen können bis zu 60 Gew.-%, bezogen auf die verstärkte Formmassse, Füllstoffe und/oder Verstärkungsstoffe, enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Den Formmassen können alle bekannten Flammschutzmittel, wie z.B. (cyclische) Chlorverbindungen und/oder Melamin und dessen Salze, wie Melamincyanurat oder Melaminsulfat und/oder roter Phosphor und/oder phosphorhaltige Flammschutzmittel und/oder Zinkoxid oder Zinkborat und ähnliche Additive in üblichen Mengen zugesetzt werden.

Die Herstellung der Mischungen aus Polyamid I und Pfropfkautschuk II kann in den üblichen Mischaggregaten, wie Walzen, Knetern, Ein- und Mehrwellenextrudern, erfolgen. Die Temperatur bei der Herstellung der Mischungen sollte mindestens 10°C und zweckmäßig höchstens 90°C oberhalb des Schmelzpunktes des Poliegen.

Die anschließende Temperung kann diskontinuierlich oder kontinuierlich bei Bedingungen, bei denen eine Oxidation weitgehend ausgeschlossen ist, d.h. unter inertem Schutzgas wie Stickstoff, Kohlendioxid, Argon oder Helium oder unter vermindertem Druck durchgeführt werden. Geeignet sind alle Apparate, die solche Bedingungen ermöglichen. Die Erhitzung kann durchgeführt werden in ruhendem oder auch in einem bewegten Bett, z.B. in einem Wirbelbett. Man kann die Erhitzung auch durchführen in senkrechten oder in waagerechten bzw. schräg gelagerten Rohrreaktoren. Die Art des Reaktors ist unkritisch. Geeignet sind im Prinzip alle Reaktoren und alle Verfahren, die bei der Polykondensation von Polyamid in fester Phase unterhalb des Polyamid-Schmelzpunktes bekannt sind. Im allgemeinen ist es zweckmäßig, die Erhitzung so vorzunehmen, daß die Formmassen dabei bewegt werden, da dadurch der Wärmeübergang erleichtert wird und gegebenenfalls auftretende Verklebungen vermieden werden. So kann es auch zweckmäßig sein, die Erhitzung bei gestaffelten Temperaturen vorzunehmen.

In bestimmten Fällen kann es vorteilhaft sein, das Tempern in Gegenwart von kleinen Mengen an Diaminen vorzunehmen, wobei es dann zweckmäßig ist, das Diamin der Polyamidkomponente zu verwenden.

Die erfindungsgemäß hergestellten Formmassen zeichnen sich durch eine verbesserte Zähigkeit aus. Ein herausragendes Merkmal ist die Verbesserung der Zähigkeit bei tiefen Temperaturen. Ein weiteres Merkmal ist die hohe Biegefestigkeit.

Die aus den erfindungsgemäß hergestellten Formmassen durch Spritzguß oder Extrusion hergestellten Formkörper eignen sich besonders dort, wo mit hohen Stoßbelastungen gerechnet werden muß, z.B. zur Verwendung im Kfz-Bereich für Stoßfänger, Spoiler, Rammleisten, Karosserieteile, Lenkräder, Lenkradsäulen oder allgemein für Apparateteile, wie Gehäuse, Griffe oder Halterungen.

Beispiele

Verwendete Komponenten:

A) Polyamid-6 mit einer relativen Viskosität (gemessen an einer 1 gew.-%igen Lösung in m-Kresol bei 25°C) von 3,0. (Komponente I)

B) Pfropfprodukt hergestellt aus 80 Gew.-% Pfropfgrundlage aus vernetztem Polybutadien (Gelgehalt 85 Gew.-%, gemessen in Toluol) und 20 Gew.-% Pfropfauflage aus Methylmethacrylat; mittlerer Teilchendurchmesser $d_{50}$ = 0,4 μm (Pfropfprodukt C aus EP-A 58 331). Komponente II)

C) Pfropfprodukt mit Kern/Mantel-Struktur, hergestellt aus : 81 Gew.-% Pfropfgrundlage mit 0,23 Gew.-Tl. Triallylcyanurat und 99,1 Gew.-Tl n-Butylacrylat, polymerisiert als Mantel um 0,66 Gew.-Tl. Polybutadienkern (Gelgehalt der Pfropfgrundlage 89 Gew.-%, gemessen in Dimethylformamid bei 25°C), sowie 19 Gew.-% Pfropfhülle aus Methylmethacrylat; mittlerer Teilchendurchmesser $d_{50}$ = 0,5 μm (Herstellung entsprechend EP-A 34 748). (Komponente II)

D) Radikalbildner, wie sie im Handel erhältlich sind. (Komponente III).

Herstellung und Prüfung der Formassen

Auf einem kontinuierlich arbeitenden Doppelwellenextruder wurden die Komponenten aufgeschmolzen homogenisiert. Die Zylindertemperaturen wurden so gewählt, daß Massetemperaturen von 260 bis 280°C eingehalten wurden. Der Schmelzstrang wurden vor dem Austritt aus der Düse entgast, in Wasser abgekühlt, granuliert und getrocknet.

Aus den Granulaten der Formmassen wurden auf einer üblichen Spritzgußmaschine ASTM- bzw. NK-Stäbe gespritzt (Massetemperatur 260°C, Formtemperatur 80°C). Geprüft wurden die Kerbschlagzähigkeit (nach Izod bzw. Charpy) bei den angegebenen Temperaturen sowie die Biegefestigkeit (nach DIN 53 452).

Das so erhaltene Granulat wurde in einem Rohr von 200°C heißem Stickstoff (6 1 Stickstoff/h bei einem Rohrdurchmesser von 20 mm) unterschiedlichen Zeiten ausgesetzt. Nach dem Abkühlen wurden Prüfstäbe hergestellt und vermessen.

| Beispiel | Komponenten (Gew.-%) | | | | Radikal-bildner | Temperzeit (Erhitzungs-dauer (h)) | Kerbschlagzähigkeit[**] $(kJ/m^2)$ | | | Biege-festigkeit (MPa) |
|---|---|---|---|---|---|---|---|---|---|---|
| | A | B | C | D | | | RT | $-20^0$ C | $-40^0$ C | |
| *1 | 70 | 30 | – | – | – | 0 | 51,5 | 46,5 | 16,0 | – |
| *1a | 70 | 30 | – | – | – | 1 | 51,8 | 48,8 | 18,9 | – |
| *1b | 70 | 30 | – | – | – | 3 | 53,6 | 49,3 | 24,3 | – |
| *2 | 70 | 30 | – | 0,2 | $K_2S_2O_8$ | 0 | 59,8 | 47,9 | 27,4 | 66,3 |
| 2a | 70 | 30 | – | 0,2 | " | 1 | 65,1 | 55,6 | 47,2 | 68,5 |
| 2b | 70 | 30 | – | 0,2 | " | 3 | 69,5 | 52,4 | 43,3 | 68,4 |
| *3 | 80 | 20 | – | 0,1 | " | 0 | 41,7 | 19,4 | 17,6 | 80,9 |
| 3a | 80 | 20 | – | 0,1 | " | 1 | 75,4 | 38,4 | 26,0 | 83,9 |
| 3b | 80 | 20 | – | 0,1 | " | 3 | 79,4 | 55,6 | 27,0 | 84,5 |
| *4 | 80 | – | 20 | 0,1 | " | 0 | 10,7 | – | – | 74,0 |
| 4a | 80 | – | 20 | 0,1 | " | 1 | 17,2 | – | – | 77,2 |

\* Vergleichsversuche

\*\*) Kerbschlagzähigkeit nach Charpy

EP 0 264 793 B1

| Beispiel | Komponenten (Gew.-%) | | | | Radikal-bildner | Temperzeit (Erhitzungs-dauer (h)) | Kerbschlagzähigkeit[*)] (J/m) | | | | Biegefestig-keit (MPa) |
|---|---|---|---|---|---|---|---|---|---|---|---|
| | A | B | C | D | | | RT | $-20^0$ C | $-30^0$ C | $-40^0$ C | |
| *1 | 70 | 30 | - | - | - | 0 | 1150 | 800 | 420 | 250 | - |
| *1a | 70 | 30 | - | - | - | 1 | 1160 | 830 | 480 | 330 | - |
| *5 | 70 | 30 | - | 0,1 | $(NH_4)_2\ S_2O_8$ | 0 | 1081 | 984 | 285 | 199 | 49,6 |
| 5a | 70 | 30 | - | 0,1 | " | 1 | 1181 | 1031 | 982 | 490 | 52,9 |
| *6 | 70 | 30 | - | 0,1 | $K_2S_2O_8$ | 0 | 1136 | 971 | 856 | 248 | 57,3 |
| 6a | 70 | 30 | - | 0,1 | " | 1 | 1231 | 1077 | - | 767 | 58,0 |
| *7 | 70 | 30 | - | 0,1 | Dibenzoyl-peroxid | 0 | 1013 | 697 | 325 | 223 | 56,1 |
| 7a | 70 | 30 | - | 0,1 | " | 1 | 1167 | 833 | 692 | 278 | 59,8 |
| *8 | 70 | 30 | - | 0,1 | t-Butylhydro-peroxid | 0 | 1109 | 941 | 823 | 329 | - |
| 8a | 70 | 30 | - | 0,1 | " | 1 | 1164 | 963 | - | 762 | - |

\* Vergleichsversuche

[*)] Kerbschlagzähigkeit nach Izod (J/m)

EP 0 264 793 B1

**Patentansprüche**

1. Verfahren zur Herstellung thermoplastischer Polyamidmassen auf Basis
I. mindestens 60 Gew.-%, bezogen auf die Komponenten I bis III, eines thermoplastischen Polyamids,
II. 3 bis 35 Gew.-%, bezogen auf die Komponenten I bis III, eines vernetzten Pfropfkautschuks mit einem Gelgehalt von mindestens 50 Gew.-%,
III, 0,01 bis 5 Gew.-% bezogen auf die Komponenten I bis III, eines Radikalbildners,
durch Vermischen der Komponenten unter Aufschmelzen, Granulieren und Erhitzen des Granulates auf Temperaturen von 5 bis 80°C unterhalb des Schmelzpunktes des Polyamids während mindestens einer halben Stunde unter möglichst weitgehendem Ausschluß von Sauerstoff.

2. Verfahren nach Anspruch 1, dadurch gekennzeichnet, daß man mindestens 68 Gew.-%, vorzugsweise mindestens 75 Gew.-%, eines thermoplastischen Polyamids verwendet.

3. Verfahren nach Ansprüchen 1 und 2, dadurch gekennzeichnet, daß man 5 bis 30 Gew.-% eines vernetzten Pfropfkautschuks mit einem Gelgehalt von mindestens 80 Gew.-%, vorzugsweise mindestens 90 Gew.-%, verwendet.

4. Verfahren nach Ansprüchen 1 bis 3, dadurch gekennzeichnet, daß man 0,01 bis 2 Gew.-% eines Radikalbildners verwendet.

5. Verfahren nach Ansprüchen 1 bis 4, dadurch gekennzeichnet, daß man anorganische und/oder organische Peroxide oder Hydroperoxide als Radikalbildner verwendet.

6. Verfahren nach Ansprüchen 1 bis 5, dadurch gekennzeichnet, daß man das Granulat unter Vakuum oder in Stickstoffatmosphäre, vorzugsweise 0,5 bis 3 Stunden, erhitzt.

**Claims**

1. A process for the production of thermoplastic polyamide compounds based on
I. at least 60% by weight, based on components I to III, of a thermoplastic polyamide,
II. 3 to 35% by weight, based on components I to III, of a crosslinked graft rubber having a gel content of at least 50% by weight,
III. 0.01 to 5% by weight, based on components I to III, of a radical former,
by mixing of the components with melting, granulation and heating of the granulate to temperatures of 5 to 80°C below the melting point of the polyamide for at least half an hour in the substantial absence of oxygen.

2. A process as claimed in claim 1, characterized in that at least 68% by weight and preferably at least 75% by weight of a thermoplastic polyamide is used.

3. A process as claimed in claims 1 and 2, characterized in that 5 to 30% by weight of a crosslinked graft rubber having a gel content of at least 80% by weight and preferably of at least 90% by weight is used.

4. A process as claimed in claims 1 to 3, characterized in that 0.01 to 2% by weight of a radical former is used.

5. A process as claimed in claims 1 to 4, characterized in that inorganic and/or organic peroxides or hydroperoxides are used as the radical former.

6. A process as claimed in claims 1 to 5, characterized in that the granulate is heated in vacuo or in a nitrogen atmosphere, preferably for 0.5 to 3 hours.

**Revendications**

1. Procédé de production de compositions thermoplastiques de polyamides à base
I. d'au moins 60% en poids, par rapport aux composants I à III, d'un polyamide thermoplastique
II. de 3 à 35% en poids, par rapport aux composants I à III, d'un caoutchouc greffé réticulé ayant une teneur en gel d'au moins 50% en poids.
III. de 0,01 à 5% en poids, par rapport aux composants I à III, d'un générateur de radicaux,
par mélange avec fusion des composants, granulation et chauffage du produit granulé à des températures de 5 à 80°C au-dessous du point de fusion du polyamide, pendant au moins une demi-heure en opérant dans la plus large mesure possible à l'abri de l'oxygène.

2. Procédé suivant la revendication 1, caractérisé en ce qu'on utilise au moins 68% en poids, de préférence au moins 75% en poids, d'un polyamide thermoplastique.

3. Procédé suivant les revendications 1 et 2, caractérisé en ce qu'on utilise 5 à 30% en poids d'un caoutchouc greffé réticulé ayant une teneur en gel d'au moins 80% en poids, de préférence d'au moins 90% en poids.

4. Procédé suivant les revendications 1 à 3, caractérisé en ce qu'on utilise 0,01 à 2% en poids d'un générateur de radicaux.

5. Procédé suivant les revendications 1 à 4, caractérisé en ce qu'on utilise comme générateurs de radicaux des peroxydes ou des hydroperoxydes inorganiques et/ou organiques.

6. Procédé suivant les revendications 1 à 5, caractérisé en ce qu'on chauffe le produit granulé sous vide ou en atmosphère d'azote de préférence pendant 0.5 à 3 heures.